# EUROPEAN PATENT APPLICATION

(11) **EP 4 528 502 A1**
(43) Date of publication of application: **26.03.2025**
(21) Application number: 23834833.8
(22) Date of filing: 04.07.2023
(51) Int. Cl.: G06F 9/455

(54) **CLOUD COMPUTING TECHNOLOGY-BASED SERVER AND CLOUD SYSTEM**

(30) Priority: 05.07.2022 CN 202210782323; 02.02.2023 CN 202310067448
(71) Applicant: Huawei Cloud Computing Technologies Co., Ltd., Guiyang, Guizhou 550025 (CN)
(72) Inventor: WANG, Jing, Guiyang, Guizhou 550025 (CN); YE, Chuan, Guiyang, Guizhou 550025 (CN); HUANG, Weidong, Guiyang, Guizhou 550025 (CN)
(74) Representative: Gill Jennings & Every LLP
(86) International application number: PCT/CN2023/105678
(87) International publication number: WO 2024/008066

(57) **Abstract**

This application provides a cloud computing technology-based server, including at least one first processor core, at least one second processor core, and a storage. The at least one first processor core is configured to execute code of an operating system configured to communicate with a cloud management platform, to start and run a first operating system, where a cloud management platform client runs in the first operating system, and the cloud management platform client is configured to obtain, from the cloud management platform, first configuration information of a first virtual machine to be created. The at least one second processor core is configured to execute code of an operating system configured to manage a virtual machine, to start and run a second operating system, where a first virtual machine manager runs in the second operating system, and the first virtual machine manager is configured to: receive first configuration information sent by the cloud management platform client, create and run the first virtual machine in the second operating system, and set, for the first virtual machine, a virtual hardware resource that matches the first configuration information.

## Description

This application claims priorities to Chinese Patent Application No. 202210782323.5, filed with the China National Intellectual Property Administration on July 5, 2022 and entitled "SERVER PARTITIONING METHOD AND APPARATUS", and to Chinese Patent Application No. 202310067448.4, filed with the China National Intellectual Property Administration on February 2, 2023 and entitled "CLOUD COMPUTING TECHNOLOGY-BASED SERVER AND CLOUD SYSTEM", both of which are incorporated herein by reference in their entireties.

### TECHNICAL FIELD

This application relates to the cloud computing field, and in particular, to a cloud computing technology-based server and a cloud system.

### BACKGROUND

With continuous development and maturity of virtualization technologies, hardware-assisted virtualization technologies are widely applied to virtualization technologies. Hardware-assisted virtualization is to provide virtualization-specific support for hardware such as processing, a chipset, and an input/output device, so that system software can implement virtualization more efficiently and easily. However, currently, virtualization software usually runs directly on hardware of a server, and a guest operating system runs on the virtualization software. However, such an architecture has many problems.

### SUMMARY

This application provides a cloud computing technology-based server, a system, and a cloud system, to separately run a first operating system and a second operating system on two different processor cores of the server.

According to a first aspect, a cloud computing technology-based server is provided, and includes at least one first processor core, at least one second processor core, and a storage. The storage stores code of an operating system configured to communicate with a cloud management platform and code of an operating system configured to manage a virtual machine. The at least one first processor core is configured to execute the code of the operating system configured to communicate with the cloud management platform, to start and run a first operating system. The at least one second processor core is configured to execute the code of the operating system configured to manage the virtual machine, to start and run a second operating system. A cloud management platform client runs in the first operating system. The cloud management platform client is configured to obtain, from the cloud management platform, first configuration information of a first virtual machine to be created. A first virtual machine manager runs in the second operating system. The first virtual machine manager is configured to: receive the first configuration information sent by the cloud management platform client, create and run the first virtual machine in the second operating system, and set, for the first virtual machine, a virtual hardware resource that matches the first configuration information.

The first virtual machine is, for example, a virtual machine provided by a public cloud vendor for a tenant to use. The tenant may remotely log in to the first virtual machine through a client (for example, a browser or a remote desktop client), and install and configure the first virtual machine with an administrator permission, for example, may configure a web service, a file service, and/or a database service on the first virtual machine.

In the foregoing solution, the first operating system and the second operating system can simultaneously run in the same server, the cloud management platform client is provided in the first operating system, and the first virtual machine manager is provided in the second operating system. If the cloud management platform client is directly installed in the first operating system, a simulated hardware interface is exposed to the virtual machine, and naturally, the first operating system is quite easily attacked by a hacker. However, in this solution, the first virtual machine manager is installed in the second operating system, and the cloud management platform client is installed in the first operating system, so that the first virtual machine manager may be isolated at an operating system level by using the second operating system, thereby effectively preventing the first operating system from being attacked by a hacker, and improving system security.

In addition, the first operating system and the second operating system are simultaneously run by different processor cores in the same server. Therefore, operating system isolation at a hardware layer can be implemented. The first operating system communicates with the cloud management platform to obtain configuration information used to create the virtual machine. The second operating system obtains the configuration information from the first operating system and creates the virtual machine provided for the tenant to use. A management plane and a service plane are implemented by using different operating systems, so that the management plane and the service plane can be isolated between the operating systems, thereby further improving system security.

In some possible designs, the cloud management platform client may further cooperate with the first virtual machine manager to manage a life cycle of the first virtual machine. The cloud management platform client is configured to obtain a management command for the life cycle of the first virtual machine from the cloud management platform and send the management command to the first virtual machine manager. The first virtual machine manager is configured to perform one or any combination of the following operations on the first virtual machine according to the management command: powering on, powering off, changing a specification, migrating, and releasing.

In the foregoing solution, the life cycle of the first virtual machine can be managed across operating systems in the same server. Therefore, even if the first virtual machine is provided in the second operating system far away from the tenant, the first virtual machine can be started, shut down, modified, migrated, and released according to an intention of the tenant, thereby ensuring that the tenant has a control right of the first virtual machine in the second operating system far away from the tenant.

In some possible designs, a virtual machine packet forwarding module further runs in the first operating system. The virtual machine packet forwarding module forwards a first service packet related to the first virtual machine to the first virtual machine or forwards a second service packet received from the first virtual machine to an external network of the server.

In the foregoing solution, the first virtual machine may implement communication with the external network of the server through the virtual machine packet forwarding module in the first operating system. In other words, the first operating system serves as a bridge for the communication between the first virtual machine in the second operating system and the external network of the server, to implement the communication between the first virtual machine and the external network of the server. In addition, because the virtual machine packet forwarding module involves sending of a large amount of input and output data, the virtual machine packet forwarding module is provided in the first operating system, to shorten a path for sending the input and output data, so that transmission efficiency of the input and output data can be effectively improved. Further, the first operating system can implement unified management and control of packets of the virtual machine running on the server of the first operating system.

In some possible designs, a virtual machine packet forwarding module further runs in the second operating system. The virtual machine packet forwarding module forwards a first service packet related to the first virtual machine to the first virtual machine or forwards a second service packet received from the first virtual machine to an external network of the server. The first service packet may be a service packet whose destination IP address is an IP address of the first virtual machine or may be a service packet whose destination MAC address is a MAC address of the first virtual machine. The second service packet may be a service packet whose source IP address is the IP address of the first virtual machine or a service packet whose source MAC address is the MAC address of the first virtual machine.

In the foregoing solution, because the virtual machine packet forwarding module is also easy to be attacked by a hacker, the virtual machine packet forwarding module is provided in the second operating system, so that the virtual machine packet forwarding module can be isolated from the first operating system by using the second operating system, thereby improving system security performance.

In some possible designs, at least one of an operating system startup module and an operating system shutdown module further runs in the first operating system. The operating system startup module is configured to trigger the at least one second processor core to execute the code of the operating system configured to manage the virtual machine, to start and run the second operating system. The operating system shutdown module is configured to trigger the at least one second processor core to stop executing the code of the operating system configured to manage the virtual machine, to shut down the second operating system.

In the foregoing solution, the operating system startup module is provided in the first operating system, so that the second operating system can be booted after the first operating system is started, so that the two operating systems simultaneously run in a same hardware system of the server. The "simultaneously" herein means that the two operating systems share different computing or storage resources of the same hardware system at least at a specific moment. In addition, the second operating system may be further shut down by using the operating system shutdown module.

In some possible designs, a specification adjustment module further runs in the first operating system. The specification adjustment module is configured to adjust a quantity of the at least one second processor core allocated to the second operating system, a size of a memory allocated to the second operating system, and/or types and a quantity of PCI devices or PCIe devices allocated to the second operating system in the server.

In some possible designs, the cloud management platform client and the first operating system cooperate with each other, to implement operating system upgrade on the second operating system. An upgrade module further runs in the first operating system. The cloud management platform client is configured to obtain an operating system upgrade file from the cloud management platform. The upgrade module is configured to trigger the at least one second processor core to perform operating system upgrade on the second operating system based on the operating system upgrade file.

In the foregoing solution, the upgrade module runs in the first operating system, so that the second operating system can be independently upgraded when the first operating system is not upgraded.

In some possible designs, a shared memory area of the first operating system and the second operating system is provided in the storage. The cloud management platform client is configured to: send the first configuration information to the shared memory area and generate an interrupt signal to notify the first virtual machine manager in the second operating system to obtain the first configuration information from the shared memory area.

In the foregoing solution, communication between two operating systems that simultaneously run on the same hardware system of the server is implemented in a manner of using the shared memory area.

In some possible designs, the server further includes at least one third processor core. The at least one third processor core is configured to execute the code of the operating system configured to manage the virtual machine, to start and run a third operating system. A second virtual machine manager runs in the third operating system. The cloud management platform client obtains, from the cloud management platform, second configuration information of a second virtual machine to be created. The second virtual machine manager is configured to: receive the second configuration information sent by the cloud management platform client, create and run the second virtual machine in the second operating system, and set, for the second virtual machine, a virtual hardware resource that matches the second configuration information. The third operating system in the third processor core is similar to the second operating system in the second processor core and has a same function. Therefore, the third operating system is not described in detail herein.

In the foregoing solution, more than three operating systems may run on the hardware system of the same server, so that multiple isolations can be implemented.

In some possible designs, the first operating system is configured to be installed with non-hot upgrade software, and the second operating system is configured to be installed with hot upgrade software. The second operating system in which the hot upgrade software is installed can be upgraded without interrupting a service, and the first operating system in which the non-hot upgrade software is installed cannot be upgraded without interrupting a service. For example, the hot upgrade software may include one or more of software that easily causes virtual machine escape, software that needs to be frequently upgraded, and the like. The non-hot upgrade software may include one or more of software that does not easily cause virtual machine escape, software that does not need to be frequently upgraded, and the like.

In the foregoing solution, the hot upgrade software is installed in the second operating system, and the non-hot upgrade software is installed in the first operating system, so that the hot upgrade software can be isolated from the first operating system by using the second operating system, thereby improving security performance. In addition, the hot upgrade software is installed in a first virtual machine management system with a small capacity. This can help upgrade the second operating system in which the hot upgrade software is installed, and also increase a speed of upgrading the second operating system in which the hot upgrade software is installed. In addition, the hot upgrade software does not involve software that needs to forward a large amount of I/O data. Therefore, upgrade can be performed without interrupting a service.

In some possible designs, a resource occupied by the second operating system is less than a resource occupied by the first operating system. Specifically, a quantity of processor cores occupied by the second operating system is less than a quantity of processor cores occupied by the first operating system, and/or storage space, of the storage, occupied by the second operating system is less than storage space, of the storage, occupied by the first operating system. An upgrade frequency of the second operating system in which the hot upgrade software is installed is greater than an upgrade frequency of the first operating system in which the non-hot upgrade software is installed. Therefore, a capacity of the second operating system needs to be smaller than a capacity of the first operating system, to help upgrade the second operating system. Therefore, the second operating system lacks a file system and a network protocol stack compared with the first operating system. In this way, the capacity of the second operating system is reduced.

In some possible designs, the second operating system and the first operating system simultaneously run in at least a period of time.

In the foregoing solution, the second operating system and the first operating system may simultaneously run on the hardware system of the same server at a same moment.

According to a second aspect, a server is provided, and includes an offloading card inserted into the server. The offloading card includes a first storage and at least one first processor core. The server further includes a second storage and at least one second processor core. The first storage stores code of an operating system configured to communicate with a cloud management platform, and the second storage stores code of an operating system configured to manage a virtual machine. The at least one first processor core is configured to execute the code of the operating system configured to communicate with the cloud management platform, to start and run a first operating system. A cloud management platform client runs in the first operating system. The at least one second processor core is configured to execute the code of the operating system configured to manage the virtual machine, to start and run a second operating system. A first virtual machine manager runs in the second operating system. The cloud management platform client is configured to obtain, from the cloud management platform, first configuration information of a first virtual machine to be created. The first virtual machine manager is configured to: receive the first configuration information sent by the cloud management platform client, create and run the first virtual machine in the second operating system, and set, for the first virtual machine, a virtual hardware resource that matches the first configuration information.

In the foregoing solution, the first operating system runs in the offloading card of the server. Because the first operating system is responsible for communicating with a network device other than the server, the first operating system is provided in the offloading card of the server, so that a length of a data transmission path can be shortened, thereby improving data transmission efficiency. In addition, the first operating system is located in the offloading card, and the second operating system is located outside the offloading card, so that isolation between the first operating system and the second operating system can be better implemented at a hardware layer.

In some possible designs, the cloud management platform client may further cooperate with the first virtual machine manager to manage a life cycle of the first virtual machine. The cloud management platform client is configured to obtain a management command for the life cycle of the first virtual machine from the cloud management platform and send the management command to the first virtual machine manager. The first virtual machine manager is configured to perform one or any combination of the following operations on the first virtual machine according to the management command: powering on, powering off, changing a specification, migrating, and releasing.

In some possible designs, a virtual machine packet forwarding module further runs in the first operating system. The virtual machine packet forwarding module forwards a first service packet related to the first virtual machine to the first virtual machine or forwards a second service packet received from the first virtual machine to an external network of the server.

In some possible designs, a virtual machine packet forwarding module further runs in the second operating system. The virtual machine packet forwarding module forwards a first service packet related to the first virtual machine to the first virtual machine or forwards a second service packet received from the first virtual machine to an external network of the server.

In some possible designs, at least one of an operating system startup module and an operating system shutdown module further runs in the first operating system. The operating system startup module is configured to trigger the at least one second processor core to execute the code of the operating system configured to manage the virtual machine, to start and run the second operating system. The operating system shutdown module is configured to trigger the at least one second processor core to stop executing the code of the operating system configured to manage the virtual machine, to shut down the second operating system.

In some possible designs, a specification adjustment module further runs in the first operating system. The specification adjustment module is configured to adjust a quantity of the at least one second processor core allocated to the second operating system, a size of a memory allocated to the second operating system, and/or types and a quantity of PCI devices or PCIe devices allocated to the second operating system in the server.

In some possible designs, the cloud management platform client and the first operating system cooperate with each other, to implement operating system upgrade on the second operating system. An upgrade module further runs in the first operating system. The cloud management platform client is configured to obtain an operating system upgrade file from the cloud management platform. The upgrade module is configured to trigger the at least one second processor core to perform operating system upgrade on the second operating system based on the operating system upgrade file.

In some possible designs, a shared memory area of the first operating system and the second operating system is provided in the second storage. The cloud management platform client is configured to: send the first configuration information to the shared memory area and generate an interrupt signal to notify the first virtual machine manager in the second operating system to obtain the first configuration information from the shared memory area.

In some possible designs, the server further includes at least one third processor core. The at least one third processor core is configured to execute the code of the operating system configured to manage the virtual machine, to start and run a third operating system. A second virtual machine manager runs in the third operating system. The cloud management platform client obtains, from the cloud management platform, second configuration information of a second virtual machine to be created. The second virtual machine manager is configured to: receive the second configuration information sent by the cloud management platform client, create and run the second virtual machine in the second operating system, and set, for the second virtual machine, a virtual hardware resource that matches the second configuration information.

According to a third aspect, a cloud system is provided, and includes a cloud management platform and a plurality of servers in network connection with the cloud management platform. The cloud management platform is configured to receive first configuration information that is of a first virtual machine to be created and that is entered by a tenant, and select, from the plurality of servers, a target server that can provide a virtual hardware resource indicated by the first configuration information. The target server includes at least one first processor core, at least one second processor core, and a storage. The storage stores code of an operating system configured to communicate with a cloud management platform and code of an operating system configured to manage a virtual machine. The at least one first processor core is configured to execute the code of the operating system configured to communicate with the cloud management platform, to start and run a first operating system. A cloud management platform client runs in the first operating system. The at least one second processor core is configured to execute the code of the operating system configured to manage the virtual machine, to start and run a second operating system. A first virtual machine manager runs in the second operating system. The cloud management platform client is configured to obtain, from the cloud management platform, first configuration information of a first virtual machine to be created. The first virtual machine manager is configured to: receive the first configuration information sent by the cloud management platform client, create and run the first virtual machine in the second operating system, and set, for the first virtual machine, a virtual hardware resource that matches the first configuration information.

In some possible designs, the cloud management platform client may further cooperate with the first virtual machine manager to manage a life cycle of the first virtual machine. The cloud management platform client is configured to obtain a management command for the life cycle of the first virtual machine from the cloud management platform and send the management command to the first virtual machine manager. The first virtual machine manager is configured to perform one or any combination of the following operations on the first virtual machine according to the management command: powering on, powering off, changing a specification, migrating, and releasing.

In some possible designs, a virtual machine packet forwarding module further runs in the first operating system. The virtual machine packet forwarding module forwards a first service packet related to the first virtual machine to the first virtual machine or forwards a second service packet received from the first virtual machine to an external network of the server.

In some possible designs, a virtual machine packet forwarding module further runs in the second operating system. The virtual machine packet forwarding module forwards a first service packet related to the first virtual machine to the first virtual machine or forwards a second service packet received from the first virtual machine to an external network of the server.

In some possible designs, at least one of an operating system startup module and an operating system shutdown module further runs in the first operating system. The operating system startup module is configured to trigger the at least one second processor core to execute the code of the operating system configured to manage the virtual machine, to start and run the second operating system. The operating system shutdown module is configured to trigger the at least one second processor core to stop executing the code of the operating system configured to manage the virtual machine, to shut down the second operating system.

In some possible designs, a specification adjustment module further runs in the first operating system. The specification adjustment module is configured to adjust a quantity of the at least one second processor core allocated to the second operating system, a size of a memory allocated to the second operating system, and/or types and a quantity of PCI devices or PCIe devices allocated to the second operating system in the server.

In some possible designs, the cloud management platform client and the first operating system cooperate with each other, to implement operating system upgrade on the second operating system. An upgrade module further runs in the first operating system. The cloud management platform client is configured to obtain an operating system upgrade file from the cloud management platform. The upgrade module is configured to trigger the at least one second processor core to perform operating system upgrade on the second operating system based on the operating system upgrade file.

In some possible designs, a shared memory area of the first operating system and the second operating system is provided in the storage. The cloud management platform client is configured to: send the first configuration information to the shared memory area and generate an interrupt signal to notify the first virtual machine manager in the second operating system to obtain the first configuration information from the shared memory area.

In some possible designs, the server further includes at least one third processor core. The at least one third processor core is configured to execute the code of the operating system configured to manage the virtual machine, to start and run a third operating system. A second virtual machine manager runs in the third operating system. The cloud management platform client obtains, from the cloud management platform, second configuration information of a second virtual machine to be created. The second virtual machine manager is configured to: receive the second configuration information sent by the cloud management platform client, create and run the second virtual machine in the second operating system, and set, for the second virtual machine, a virtual hardware resource that matches the second configuration information.

In some possible designs, the first operating system is configured to be installed with non-hot upgrade software, and the second operating system is configured to be installed with hot upgrade software. The second operating system in which the hot upgrade software is installed can be upgraded without interrupting a service, and the first operating system in which the non-hot upgrade software is installed cannot be upgraded without interrupting a service. For example, the hot upgrade software may include one or more of software that easily causes virtual machine escape, software that needs to be frequently upgraded, and the like. The non-hot upgrade software may include one or more of software that does not easily cause virtual machine escape, software that does not need to be frequently upgraded, and the like.

In some possible designs, a resource occupied by the second operating system is less than a resource occupied by the first operating system. Specifically, a quantity of processor cores occupied by the second operating system is less than a quantity of processor cores occupied by the first operating system, and/or storage space, of the storage, occupied by the second operating system is less than storage space, of the storage, occupied by the first operating system. An upgrade frequency of the second operating system in which the hot upgrade software is installed is greater than an upgrade frequency of the first operating system in which the non-hot upgrade software is installed. Therefore, a capacity of the second operating system needs to be smaller than a capacity of the first operating system, to help upgrade the second operating system. Therefore, the second operating system lacks a file system and a network protocol stack compared with the first operating system. In this way, the capacity of the second operating system is reduced.

In some possible designs, the second operating system and the first operating system simultaneously run in at least a period of time.

According to a fourth aspect, a cloud system is provided, and includes a cloud management platform and a plurality of servers in network connection with the cloud management platform. The cloud management platform is configured to receive first configuration information that is of a first virtual machine to be created and that is entered by a tenant, and select, from the plurality of servers, a target server that can provide a virtual hardware resource indicated by the first configuration information. The target server includes an offloading card inserted into the target server, where the offloading card includes a first storage and at least one first processor core. The target server further includes a second storage and at least one second processor core. The first storage stores code of an operating system configured to communicate with the cloud management platform, and the second storage stores code of an operating system configured to manage a virtual machine. The at least one first processor core is configured to execute the code of the operating system communicating with the cloud management platform, to start and run a first operating system. A cloud management platform client runs in the first operating system. The at least one second processor core is configured to execute the code of the operating system configured to manage the virtual machine, to start and run a second operating system. A first virtual machine manager runs in the second operating system. The cloud management platform client is configured to obtain, from the cloud management platform, first configuration information of a first virtual machine to be created. The first virtual machine manager is configured to: receive the first configuration information sent by the cloud management platform client, create and run the first virtual machine in the second operating system, and set, for the first virtual machine, a virtual hardware resource that matches the first configuration information.

In some possible designs, the cloud management platform client may further cooperate with the first virtual machine manager to manage a life cycle of the first virtual machine. The cloud management platform client is configured to obtain a management command for the life cycle of the first virtual machine from the cloud management platform and send the management command to the first virtual machine manager. The first virtual machine manager is configured to perform one or any combination of the following operations on the first virtual machine according to the management command: powering on, powering off, changing a specification, migrating, and releasing.

In some possible designs, a virtual machine packet forwarding module further runs in the first operating system. The virtual machine packet forwarding module forwards a first service packet related to the first virtual machine to the first virtual machine or forwards a second service packet received from the first virtual machine to an external network of the server.

In some possible designs, a virtual machine packet forwarding module further runs in the second operating system. The virtual machine packet forwarding module forwards a first service packet related to the first virtual machine to the first virtual machine or forwards a second service packet received from the first virtual machine to an external network of the server.

In some possible designs, at least one of an operating system startup module and an operating system shutdown module further runs in the first operating system. The operating system startup module is configured to trigger the at least one second processor core to execute the code of the operating system configured to manage the virtual machine, to start and run the second operating system. The operating system shutdown module is configured to trigger the at least one second processor core to stop executing the code of the operating system configured to manage the virtual machine, to shut down the second operating system.

In some possible designs, a specification adjustment module further runs in the first operating system. The specification adjustment module is configured to adjust a quantity of the at least one second processor core allocated to the second operating system, a size of a memory allocated to the second operating system, and/or types and a quantity of PCI devices or PCIe devices allocated to the second operating system in the server.

In some possible designs, the cloud management platform client and the first operating system cooperate with each other, to implement operating system upgrade on the second operating system. An upgrade module further runs in the first operating system. The cloud management platform client is configured to obtain an operating system upgrade file from the cloud management platform. The upgrade module is configured to trigger the at least one second processor core to perform operating system upgrade on the second operating system based on the operating system upgrade file.

In some possible designs, a shared memory area of the first operating system and the second operating system is provided in the second storage. The cloud management platform client is configured to: send the first configuration information to the shared memory area and generate an interrupt signal to notify the first virtual machine manager in the second operating system to obtain the first configuration information from the shared memory area.

In some possible designs, the server further includes at least one third processor core. The at least one third processor core is configured to execute the code of the operating system configured to manage the virtual machine, to start and run a third operating system. A second virtual machine manager runs in the third operating system. The cloud management platform client obtains, from the cloud management platform, second configuration information of a second virtual machine to be created. The second virtual machine manager is configured to: receive the second configuration information sent by the cloud management platform client, create and run the second virtual machine in the second operating system, and set, for the second virtual machine, a virtual hardware resource that matches the second configuration information.

### BRIEF DESCRIPTION OF DRAWINGS

FIG. 1 is a diagram of a structure of a cloud system according to this application;
FIG. 2 is a diagram of a structure of an operating system startup module according to this application;
FIG. 3 is a diagram of booting, by using an operating system startup module, a second operating system to start according to this application;
FIG. 4A to FIG. 4E are diagrams of some deployment modes of hot upgrade software and non-hot upgrade software according to this application; and
FIG. 5 is a diagram of a structure of another cloud system according to this application.

### DESCRIPTION OF EMBODIMENTS

The following first defines some names in this application.

Virtual machine monitor (virtual machine monitor, VMM): Software layer between computer hardware and an operating system, where the VMM runs at a privilege level and is responsible for managing and isolating a plurality of virtual machines running at an upper layer, provides a secure and independent running environment for these virtual machines, and also provides, through virtualization, each virtual machine with a virtual hardware environment, for example, a display, a hard disk drive, a CPU, a memory, and a network interface card, that is irrelevant to real hardware.

Kernel-based virtual machine (kernel-based virtual machine, KVM): Virtualization infrastructure based on a Linux kernel, where the KVM may convert the Linux kernel into a virtual machine monitor, the KVM provides only an abstract device but does not simulate a processor, and only a /dev/kvm interface is opened for a user to invoke.

Linux: Free-of-charge and freely distributed Unix-like operating system, where Linux is a multi-user and multi-task operating system that supports multi-thread and multi-CPU and that is based on POSIX and UNIX, can run major UNIX tool software, application programs, and network protocols, and support 32-bit and 64-bit hardware, and Linux inherits a network-based design idea of Unix and is a multi-user network operating system with stable performance.

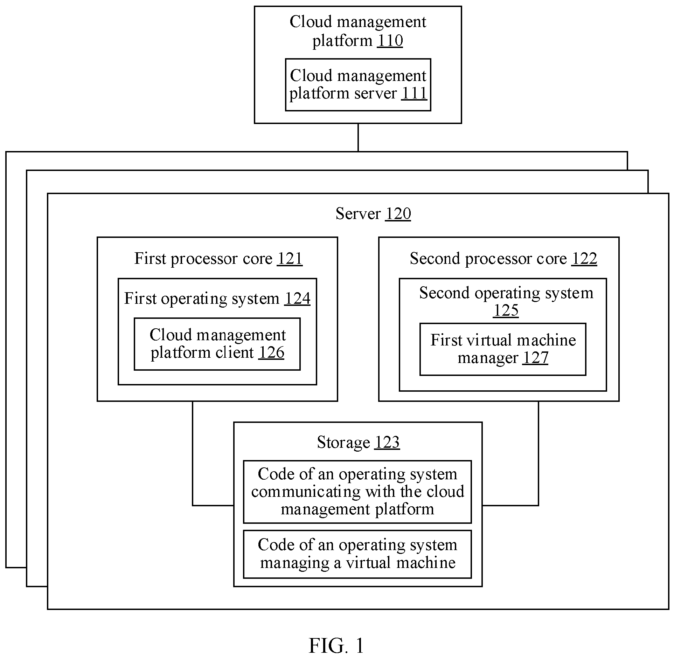

FIG. 1 is a diagram of a structure of a cloud system according to this application. As shown in FIG. 1, the cloud system provided in this application includes a cloud management platform 110 and a plurality of servers 120 in network connection with the cloud management platform 110.

The cloud management platform 110 is a platform configured to manage the plurality of servers 120. The cloud management platform 110 and the plurality of servers 120 may be disposed in a same region, or the cloud management platform 110 and the plurality of servers 120 may be disposed in different regions. This is not specifically limited herein. The cloud management platform 110 may include a cloud management platform server 111. The cloud management platform server 111 may cooperate with a cloud management platform client 126 to complete management of the server by the cloud management platform.

The server includes one or more processors, and the one or more processors may include one or more processor cores. The server may further include one or more memories, one or more network interface card devices, and the like. In a specific embodiment, the server includes at least one first processor core 121, at least one second processor core 122, and a storage 123.

The storage 123 is configured to store code of an operating system communicating with the cloud management platform and code of an operating system configured to manage a virtual machine.

The first processor core 121 is configured to execute the code of the operating system configured to communicate with the cloud management platform, to start and run a first operating system 124. There may be one or more first processor cores 121. Usually, the first operating system 124 may be responsible for managing resources of the server, including a computing resource, a storage resource, a network resource, and the like. The first operating system 124 may further allocate a computing resource, a storage resource, a network resource, and the like to a second operating system 125, and manage the second operating system 125. Therefore, the first operating system 124 usually has a large capacity, to be specific, the first operating system usually includes more components, and the first operating system 124 usually needs to occupy more computing resources, storage resources, and network resources.

The second processor core 122 is configured to execute the code of the operating system configured to manage the virtual machine, to start and run the second operating system. There may be one or more first processor cores 121. Usually, the second operating system 125 may be responsible for managing resources of the second operating system, including a computing resource, a storage resource, a network resource, and the like. A resource in the second operating system 125 is usually a part of the resources managed by the first operating system. Therefore, the second operating system 125 may have a small capacity, to be specific, the second operating system 125 may include fewer components. For example, the second operating system 125 may lack a file system and a network protocol stack compared with the first operating system 124.

To enable the first operating system 124 and the second operating system 125 to run on a same hardware system, problems that need to be resolved include: startup of the first operating system 124 and the second operating system 125, and communication between the first operating system 124 and the second operating system 125.

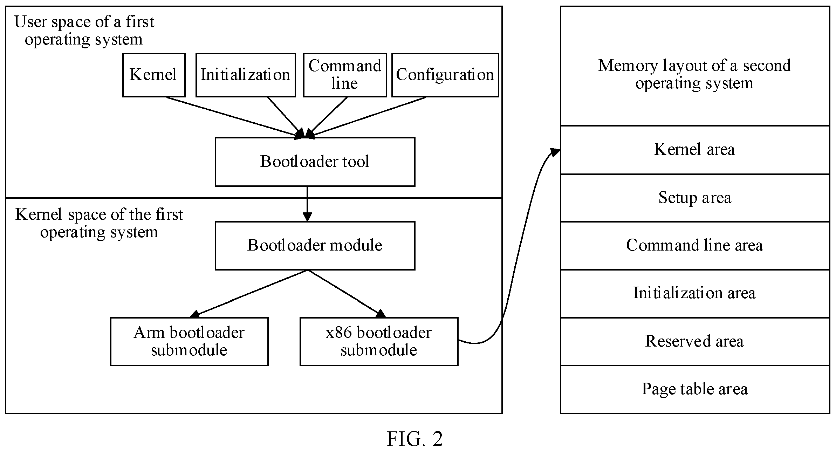

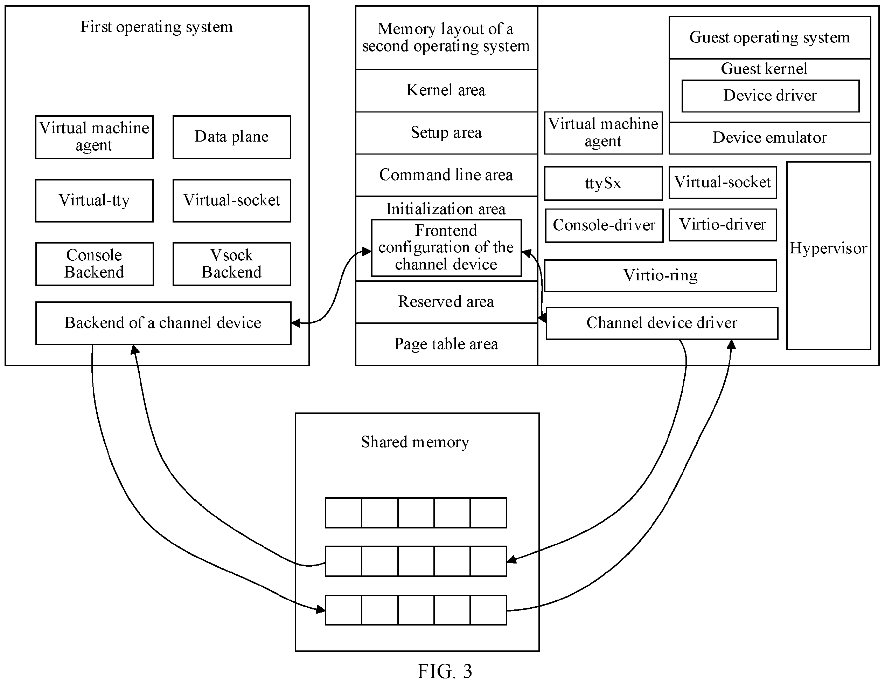

In the past, only one operating system usually runs on a hardware system of the server at a same moment. Therefore, only one operating system is started when the server is started. However, a host operating system and a guest operating system respectively run on the hardware system of the server and the virtual machine, and running environments of the two are completely different. In this way, after the host operating system is started, a method for booting the guest operating system is not applicable to a case in which two or more operating systems simultaneously run on the hardware system of the server. How to start another operating system needs to be considered if two or more operating systems are required to run on the hardware system of the server at a same moment. For example, two operating systems, namely, the first operating system and the second operating system, run on the hardware system of the server. In an initialization phase of the server, the first operating system may be booted in a basic input/output system (basic input/output system, BIOS) or a bootloader to start. After the first operating system is successfully started, a quantity of remaining resources in the hardware system of the server that can be allocated to the second operating system may be calculated with reference to a service deployment status. Then, the first operating system may boot, by using the operating system startup module, the second operating system to start. As shown in FIG. 2, the operating system startup module includes a bootloader tool (bootloader tool) and a bootloader module (bootloader module). The bootloader module may include one or more bootloader submodules. For example, the bootloader submodule may be an x86 bootloader submodule (for example, x86-boot-loader) applicable to an x86-based hardware platform or may be an arm bootloader submodule (for example, arm-boot-loader) applicable to an arm-based hardware platform. The bootloader tool may be provided in user space (user space) of the first operating system, and the bootloader module may be provided in kernel space (kernel space) of the first operating system. As shown in FIG. 3, a specific process in which the first operating system boots, by using the operating system startup module, the second operating system to start may be: correspondingly loading, by using the operating system startup module by invoking an interface provided by the bootloader module, a kernel, an initialization module, and a command line module of the second operating system to a memory area for the second operating system to use. The kernel may be loaded to a kernel area (kernel area) in the memory area used by the second operating system, the initialization module is loaded to an initialization area (initrd area) in the memory area used by the second operating system, and the command line module is loaded to a command line area (cmdline area) in the memory area used by the second operating system. In addition, the memory area used by the second operating system further includes: a setup area (setup area), a reserved area (reserved area), a page table area (page table area), and the like. Then, the bootloader submodule in the bootloader module notifies, by using an APIC wake-up IPI mechanism, a processor core used by the second operating system to perform initialization of the second operating system, to complete startup of the second operating system. Correspondingly, an operating system shutdown module may be further disposed in the first operating system. The operating system shutdown module is configured to trigger the at least one second processor core to stop executing the code of the operating system configured to manage the virtual machine, to shut down the second operating system. In this way, the first operating system may randomly start and shut down the second operating system by using the operating system startup module and the operating system shutdown module. In addition, a specification adjustment module may be further provided in the first operating system. The specification adjusting module is configured to adjust a quantity of the at least one second processor core, a size of a memory allocated to the second operating system, and/or types and a quantity of PCI devices or PCIe devices allocated to the second operating system. The second operating system may be adjusted before the second operating system is started or may be adjusted before the second operating system is restarted. In a specific embodiment, the specification adjustment module may be an application of the first operating system. A system administrator may adjust a specification of a secondary operating system in the application, and perform operations such as starting, shutting down, and upgrading on the second operating system.

When there are two or more operating systems running on the hardware system of the server, there is a requirement for communication between the operating systems. In the past, there is usually only one operating system running on a hardware system of a server at a same moment. Therefore, naturally, there is no mechanism for communication between two operating systems running on a hardware system of a same server. In addition, although there is a mechanism for communication between a first operating system and a guest operating system in a current technology, the first operating system and the guest operating system are respectively an operating system running on a hardware system of a server and an operating system running on a virtual machine. Therefore, the mechanism for communication between the first operating system and the guest operating system is not applicable to communication between a plurality of operating systems that simultaneously run on a hardware system of a same server. Therefore, communication channels for the plurality of operating systems running on the hardware system of the server need to be set up. For example, two operating systems, namely, the first operating system and the second operating system, run on the hardware system of the server. A channel device may be simulated by using a shared memory pool and an IPI interrupt message. When the first operating system boots the second operating system to start, configuration information of the channel device may be written into a reserved area in the memory area used by the second operating system. In this way, a channel device driver (channel device driver) in the second operating system may obtain the configuration information of the channel device from the reserved area, and is initialized based on the configuration information of the channel device. Message interworking may be implemented based on the channel device after the initialization is completed by the channel device driver.

The first operating system and the second operating system that run in the same server may have the following features.
(1) The first operating system and the second operating system may simultaneously run in at least a period of time. After the first operating system is started, the first operating system may boot the second operating system to start, and then the first operating system and the second operating system simultaneously run. The "simultaneously run" herein may mean that the first operating system and the second operating system simultaneously serve as instances in different processor cores at a same moment and are in an active state. An example is used for description. Hardware devices in the hardware system on the server include: 128 processor cores, 512 G of internal memory, and 16 PCI devices. These hardware devices are allocated to the two different operating systems for use. The first operating system occupies 100 processor cores, 12 G of internal memory, and one PCI device, and the second operating system occupies 28 processor cores, 500 G of internal memory, and 14 PCI devices. Each operating system uses only its own processor cores, internal memory, and PCI devices. If a specific hardware device, for example, a remaining PCI device, is globally unique, a method for using the globally unique hardware device is determined depending on whether the globally unique hardware device can be shared. The two operating systems need to perform time division use if the globally unique hardware device can be shared. The globally unique hardware device can be used by only one operating system if the globally unique hardware device cannot be shared. In this case, the two operating systems simultaneously run.
(2) Both the first operating system and the second operating system may be directly installed on the hardware system of the server. The meaning herein is that the second operating system may be directly installed on a processor core of a same server without using virtual hardware simulation software, and the first operating system may also be directly installed on the processor core of the same server without using the virtual hardware simulation software. Therefore, no virtual hardware simulation software is spaced between the first operating system and the second operating system. On the contrary, in the current technology, a first operating system is installed on a hardware system of a server, then virtual hardware simulation software is installed on the first operating system, and then a guest operating system is installed on the virtual hardware simulation software. In this case, the virtual hardware simulation software is spaced between the first operating system and the guest operating system. Therefore, the first operating system is directly installed on the hardware system of the server, but the guest operating system is not directly installed on the hardware system of the server.
(3) The first operating system and the second operating system may be isolated from each other. That the first operating system and the second operating system are isolated from each other means that a hardware resource occupied by the first operating system and a hardware resource occupied by the second operating system are "isolated from each other". In a possible embodiment, the first operating system and the second operating system are respectively installed in a first partition and a second partition of the server, so that physical isolation is implemented. For example, the hardware system on the server includes: 128 processor cores, 512 G of internal memory, and 16 PCI devices. These hardware systems are allocated to the two different operating systems for use. The first operating system occupies 100 processor cores, 12 G of internal memory, and one PCI device in the first partition, and the second operating system occupies 28 processor cores, 500 G of internal memory, and 14 PCI devices in the other partition. Each operating system uses only its own processor cores, internal memory, and PCI devices. Hardware resources of the two operating systems do not overlap. In this case, the two operating systems are isolated from each other.
(4) The first operating system may manage the second operating system. The first operating system may manage most or all hardware systems on the server, but the first operating system may allocate some hardware devices to the second operating system for use. The first operating system has a life cycle management capability specific to the second operating system. This may be specifically reflected in that the first operating system may start the second operating system, the first operating system may reclaim a resource of the second operating system, and normal running of the first operating system is not affected when a fault occurs in the second operating system, but normal running of the second operating system is affected when a fault occurs in the first operating system.

It may be understood that a Windows system, a Linux system, or the like, or any one of a tailored version thereof may be used for the first operating system. A Windows system, a Linux system, or any one of a tailored version thereof may be used for the second operating system. A same operating system or different operating systems may be used for the first operating system and the second operating system. For example, the Linux system may be used for both the first operating system and the second operating system, or the Windows system may be used for the second operating system and the Linux system may be used for the first operating system.

A first virtual machine may be created in the second operating system after the first operating system and the second operating system are both installed in a same hardware system of the server. To create the first virtual machine, the cloud management platform server 111 may be provided in the cloud management platform 110, the cloud management platform client 126 may be provided in the first operating system 124 of the server, and a first virtual machine manager 127 may be provided in the second operating system 125 of the server. The cloud management platform server 111, the cloud management platform client 126, and the first virtual machine manager 127 are configured to cooperate with each other to jointly complete creation of the first virtual machine. Specifically, the cloud management platform server 111 receives first configuration that is of the first virtual machine to be created and that is entered by a tenant, selects a target server from the plurality of servers based on the first configuration information, and sends the first configuration information to a cloud management platform client 126 in a first operating system, for example, a virtual machine manager (VM manager), of the target server. The cloud management platform client 126 in the first operating system sends the first configuration information to a shared memory area and generates an interrupt signal to notify the first virtual machine manager 127, for example, a virtual machine manager agent (VM manager agent), in the second operating system to obtain the first configuration information from the shared memory area. After receiving the first configuration information, the first virtual machine manager 127 creates the first virtual machine on the second operating system 125 based on the first configuration information, and provides, for the first virtual machine, a virtual hardware resource that matches the first configuration information. The first configuration information includes a specification of the first virtual machine to be created, for example, a size of a storage, a type of the storage, a size of a memory, a type of the memory, a type of a processor core, a quantity of processor cores, a computing speed of the processor core, a quantity of cores of the processor core, a network bandwidth, and a life cycle of the first virtual machine. The first configuration information may include at least two manners. In a first manner, the first configuration information may be entered by the tenant on an interface. The user may enter, based on a requirement of the user, a type of a processor core, a quantity of processor cores, a computing capability requirement of the processor core, a type of a storage, a quantity of memories, a size of a memory, a type of the memory, a network bandwidth requirement, and the like that are needed. In this case, the first virtual machine may be understood as privately customized. In a second manner, the first configuration information may be selected from a plurality of types of possible configuration information provided by an interface, in other words, a user can only select the first configuration information from the plurality of types of configuration information, and cannot determine, based on a requirement of the user, a type of a processor core, a quantity of processor cores, a computing capability requirement of the processor core, a type of a storage, a size of the storage, a size of a memory, a type of the memory, a network bandwidth requirement, and the like. In this case, the first virtual machine may be understood as being provided according to a specification, and the user can select a specification suitable for the user only from limited specifications. The virtual hardware resource includes a computing resource, a storage resource, a network resource, and the like that need to be used by the first virtual machine. For example, the virtual hardware resource may include a virtual processor core generated by the first virtual machine manager by virtualizing the second processor core. The virtual processor core may be a time slice of the second processor core (for example, 10 ms may be allocated from each second of the second processor core to the virtual machine for use). The cloud management platform client may further obtain a management command for a life cycle of the first virtual machine from the cloud management platform, and send the management command to the first virtual machine manager. The first virtual machine manager performs one or any combination of the following operations on the first virtual machine according to the management command: powering on, powering off, changing a specification, migrating, and releasing.

When a plurality of virtual machines need to be created, methods for creating the virtual machines are similar to the manner for creating the first virtual machine. For example, the server further includes at least one third processor core, and the cloud management platform client obtains, from the cloud management platform, second configuration information of a second virtual machine to be created. The at least one third processor core is configured to execute the code of the operating system configured to manage the virtual machine, to start and run a third operating system, where a second virtual machine manager is provided in the third operating system, and the second virtual machine manager receives the second configuration information sent by the cloud management platform client, creates the second virtual machine in the second operating system, and provides, for the second virtual machine, a virtual hardware resource that matches the second configuration information.

In the foregoing solution, the first operating system and the second operating system can simultaneously run in the same server, the cloud management platform client is provided in the first operating system, and the first virtual machine manager is provided in the second operating system. If the cloud management platform client is directly installed in the first operating system, a simulated hardware interface is exposed to the virtual machine, and naturally, the first operating system is quite easily attacked by a hacker. However, in this solution, the first virtual machine manager is installed in the second operating system, and the cloud management platform client is installed in the first operating system, so that the first virtual machine manager may be isolated at an operating system level by using the second operating system, thereby effectively preventing the first operating system from being attacked by a hacker, and improving system security.

In addition, the first operating system and the second operating system are simultaneously run by different processor cores in the same server. Therefore, operating system isolation at a hardware layer can be implemented. The first operating system communicates with the cloud management platform to obtain configuration information used to create the virtual machine. The second operating system obtains the configuration information from the first operating system and creates the virtual machine provided for the tenant to use. A management plane and a service plane are implemented by using different operating systems, so that the management plane and the service plane can be isolated between the operating systems, thereby further improving system security.

After the first virtual machine is created in the second operating system, to implement packet forwarding of the first virtual machine, that is, to forward a first service packet related to the first virtual machine to the first virtual machine or forward a second service packet received from the first virtual machine to an external network of the server, a virtual machine packet forwarding module further needs to be provided in the server. The virtual machine packet forwarding module may be, for example, a component such as a DPDK. The first service packet may be a service packet whose destination IP address is an IP address of the first virtual machine or may be a service packet whose destination MAC address is a MAC address of the first virtual machine. The second service packet may be a service packet whose source IP address is the IP address of the first virtual machine or a service packet whose source MAC address is the MAC address of the first virtual machine. At least two manners in which the virtual machine packet forwarding module is provided may be included. In a first manner, the virtual machine packet forwarding module may be provided in the first operating system. Because the virtual machine packet forwarding module involves sending of a large amount of input and output data, the virtual machine packet forwarding module is provided in the first operating system, to shorten a data sending path, so that data transmission efficiency can be effectively improved. In a second manner, the virtual machine packet forwarding module may be provided in the second operating system. Because the virtual machine packet forwarding module may also be attacked by a hacker, the virtual machine packet forwarding module is provided in the second operating system, so that the virtual machine packet forwarding module can be isolated from the first operating system by using the second operating system, thereby improving system security performance.

The second operating system on which the first virtual machine is installed is easily to be attacked by a hacker. Therefore, the second operating system needs to be upgraded and a vulnerability needs to be fixed in time. However, a service usually runs in the first virtual machine. If cold upgrade is used, the service in the first virtual machine is interrupted, and user experience is affected. In the past, only one first operating system runs on a hardware system of a server, and various software is installed in the first operating system. Therefore, the operating system has a large capacity. In addition, software related to network storage and forwarding is usually further included. Hot upgrade cannot be performed. Herein, cold upgrade refers to upgrade performed when the service is interrupted. Hot upgrade refers to upgrade performed when the service is not interrupted. However, the second operating system in this application needs to be hot upgraded. Therefore, an original upgrade method is not applicable to the second operating system in this application. In this application, an upgrade module is further provided in the first operating system. The upgrade module is configured to trigger the second operating system to perform operating system upgrade according to an operating system upgrade file, where the operating system upgrade file is obtained from the cloud management platform. The second operating system may be upgraded in the following two upgrade manners.

In a first manner, an interface of the first virtual machine manager is invoked to notify the first virtual machine to be suspended and complete the following operations: (a) marking a memory location of the first virtual machine, and storing mark information in a storage medium (for example, a memory, a magnetic disk, or a persistent memory). (b) A status of the first virtual machine (for example, a processor core register, processor core context, a simulation device state, and a simulation device internal memory) is stored in the storage medium. A new second operating system is restarted after the mark information and the status of the first virtual machine are saved. A startup process of the new second operating system is as follows: First, an old second operating system is shut down, and the first operating system re-boots, after the shutdown, the new second operating system by using the operating system startup module. Most processor cores of the old second operating system are frozen or brought offline, and only a small part (or even only one) of processor cores of the old second operating system is reserved for running. Then, a processor core of a virtual machine monitor (for example, a hypervisor) boots the new second operating system. In the startup process of the new second operating system, the marked internal memory location of the first virtual machine is identified, to avoid modifying the memory of the first virtual machine. After the new second operating system is started, the first virtual machine is restored based on the status of the first virtual machine that is stored in the storage medium. Finally, the first virtual machine is notified, by using the interface of the first virtual machine manager, that the first virtual machine is restored to run, and the service of the first virtual machine is restored to normal. Herein, the old second operating system is first brought offline, and then the new second operating system is started. This can effectively reduce resource consumption.

In a second manner, the operating system startup module is invoked to boot the new second operating system. Specifically, the following steps may be performed to switch from the old second operating system to the new second operating system: starting, in the new second operating system, a virtual machine simulator that has a same configuration as that of the virtual machine of the old second operating system, and notifying the old second operating system to share internal memory location information and device status information with the virtual machine simulator started in the new second operating system. The sharing may be that the virtual machine in the old second operating system writes the memory location information and the device status information into a storage medium and then notifies the new second operating system to obtain the memory location information and the device status information, or sends the memory location information and the device status information to the new second operating system by using a transmission apparatus of the old second operating system. A processor core used by the virtual machine is brought offline in the old second operating system, and the processor core used by the virtual machine is brought online in the new second operating system. The virtual machine simulator started in the new second operating system restores running of the virtual machine, and running of the virtual machine simulator is shut down in the old second operating system. After the first virtual machine switches from the old second operating system to the new second operating system, the old second operating system is shut down, and then a hardware resource (a processor core, a memory, a hardware device, and the like) finally used by the old second operating system is reclaimed, where the reclaimed hardware resource may be reused in the new second operating system or reserved for next upgrade. It may be understood that, the following steps are all optional: bringing offline the processor core used by the first virtual machine in the old second operating system, bringing online the processor core used by the first virtual machine in the new second operating system, and reclaiming the hardware resource finally used by the old second operating system. Herein, the new second operating system and the old second operating system simultaneously run, and the old second operating system is not brought offline until the new second operating system is ready, so that a service interruption time can be effectively reduced.

The foregoing cloud system may be applied to various scenarios. The following uses a specific application scenario as an example for description. In this application scenario, the second operating system is an operating system configured to be installed with hot upgrade software, and the first operating system is an operating system configured to be installed with non-hot upgrade software. The hot upgrade software is software that causes virtual machine escape. Herein, the virtual machine escape refers to a process of breaking through a limitation of a virtual machine and implementing interaction with the operating system. An attacker may infect a host or run malicious software on the host through the virtual machine escape. Therefore, the operating system in which the hot upgrade software is located needs to be frequently upgraded, to avoid an attack by the hacker. More specifically, the hot upgrade software may be virtual hardware simulation software, for example, device emulator (device emulator), a virtual machine monitor (virtual machine monitor, VMM) (for example, QUME, a KVM, or a hypervisor), or a first virtual machine manager, for example, a virtual machine manager agent (VM manager agent). In another possible embodiment, the hot upgrade software is usually software that does not involve a large quantity of input and output operations such as network data forwarding and storage data forwarding, and that causes virtual machine escape. Hot upgrade is convenient because the large quantity of input and output operations such as network data forwarding and storage data forwarding are not involved. The hot upgrade is required because the virtual machine escape is caused. In addition, the second operating system is further configured to be installed with some non-hot upgrade software. For example, when space of the first operating system is insufficient, some non-hot upgrade software may alternatively be installed in the second operating system. For ease of hot upgrade, the second operating system may have a small capacity, and may specifically include one or more of the following: (1) The second operating system is a tailored operating system, where for example, the second operating system may not include a file system or a network protocol stack. (2) The second operating system occupies a small quantity of resources, where for example, the second operating system occupies a small quantity of processor cores, and/or the second operating system occupies a small quantity of storage space of a storage.

The first operating system is an operating system configured to be installed with the non-hot upgrade software. The first operating system in which the non-hot upgrade software is installed cannot be upgraded without interrupting a service. In a possible embodiment, the non-hot upgrade software is software that does not cause virtual machine escape, and therefore does not need to be frequently upgraded, to avoid poor user experience caused by service interruption. The first operating system in which the non-hot upgrade software is installed may be upgraded when no service is performed. It may be understood that an upgrade frequency of the first operating system in which the non-hot upgrade software is installed may be less than that of the second operating system in which the hot upgrade software is installed. In this case, the non-hot upgrade software may include a virtual machine manager (VM manager) and the like. In another possible embodiment, the non-hot upgrade software is usually software that involves a large quantity of input and output operations such as network data forwarding and storage data forwarding, and that does not cause virtual machine escape. Hot upgrade is inconvenient because the network data forwarding and the storage data forwarding are involved. The hot upgrade is not required because the virtual machine escape is not caused. In this case, the non-hot upgrade software may include a DPDK, a virtual machine manager, and the like. Because the hot upgrade does not need to be performed, the first operating system may have a large capacity, and may specifically include one or more of the following: (1) The first operating system is an operating system that is not tailored, where for example, the first operating system may include a file system and a network protocol stack. (2) The first operating system occupies a large quantity of resources, where for example, the first operating system occupies a large quantity of processor cores, and/or the first operating system occupies a large quantity of storage space of a storage.

In the foregoing descriptions, the hot upgrade software is software that causes the virtual machine escape, and the non-hot upgrade software is software that does not cause the virtual machine escape. During actual application, the hot upgrade software may alternatively be software that easily causes the virtual machine escape, to be specific, software that causes a high probability of virtual machine escape, and the non-upgrade software may alternatively be software that does not easily cause the virtual machine escape, to be specific, software that causes a low probability of virtual machine escape. In this specification, "causes" and "does not cause" the virtual machine escape are used for description. However, "causes" and "does not cause" should include meanings of "easily causes" and "does not easily cause".

In the foregoing solution, the hot upgrade software in which the virtual machine escape occurs is provided in the second operating system, and the non-hot upgrade software in which the virtual machine escape does not occur is provided in the first operating system, so that even if the virtual machine escape occurs in the hot upgrade software in the second operating system, the virtual machine escape is still limited in the second operating system, and the first operating system is not affected, thereby effectively improving system security performance. In addition, the hot upgrade software installed in the second operating system does not involve the large quantity of input and output operations such as network data forwarding and storage data forwarding, and the hot upgrade may be performed without interrupting a service. Therefore, the second operating system may be upgraded in time, to be prevented from being attacked by the hacker.

With reference to the accompanying drawings, the following describes in detail several specific implementations of respectively deploying the hot upgrade software and the non-hot upgrade software into the second operating system and the first operating system in the server.

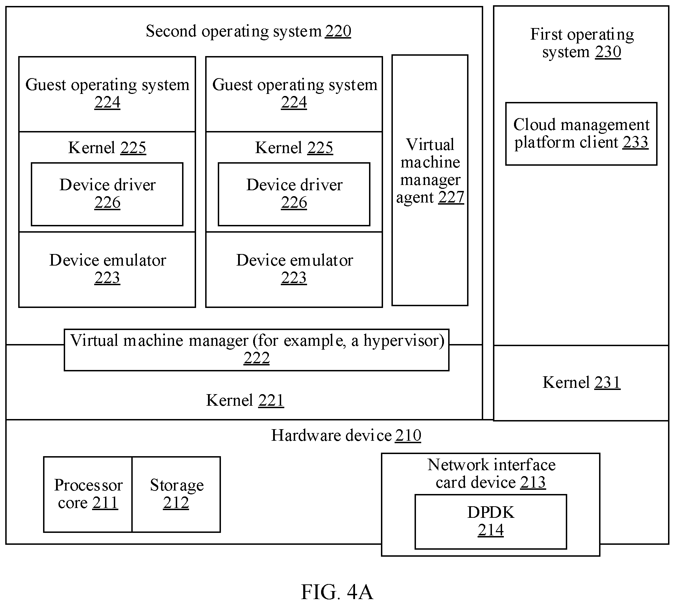

In a first manner, a DPDK is provided in a network interface card device of the server, and the network interface card device in the server is an intelligent network interface card. In a specific embodiment, as shown in FIG. 4A, a hardware device 210 of a server includes a processor core 211, a storage 212, a network interface card device 213 (an intelligent network interface card), and the like. A second operating system 220 and a first operating system 230 simultaneously run on the hardware device 210 of the server. The second operating system 220 may include a kernel 221 of the second operating system. A virtual machine manager 222, for example, a hypervisor or a VMM, may be installed in the kernel 221 of the second operating system, and one or more device emulators 223 may be provided above the kernel 221 of the second operating system. A guest operating system 224 may be installed above the device emulator 223. The guest operating system 224 may include a kernel 225 of the guest operating system, and a device driver (device driver) 226 may be installed in the kernel 225 of the guest operating system. A virtual machine manager agent (VM manager agent) 227 may be further installed in the second operating system 220, to help invoke a cloud management platform client 233 in the first operating system 230. The first operating system 230 may include a kernel (for example, a kernel) 231 of the first operating system, and the cloud management platform client 233 may be installed in the first operating system 230. A DPDK 214 is installed in the network interface card device 213.

The processor core 211 may include the first processor core and the second processor core that are mentioned above. The first processor core is configured to run the first operating system 230, and the second processor core is configured to run the second operating system 220. The virtual machine manager 222 may be the first virtual machine manager mentioned above. The foregoing virtual machine packet forwarding module, operating system startup module, operating system shutdown module, specification adjustment module, and upgrade module may be further installed in the first operating system. The virtual machine packet forwarding module may be installed in the first operating system, or may be installed in the second operating system. This is not specifically limited herein.

In the foregoing solution, the virtual machine management agent 227 is provided, and may be configured to create a virtual machine. During actual application, the virtual machine management agent 227 may alternatively not be provided, but the virtual machine manager 222 is responsible for creating the virtual machine.

In the foregoing solution, the DPDK is installed in the intelligent network interface card, so that a forwarding speed of a network storage data plane can be effectively improved, thereby improving user experience.

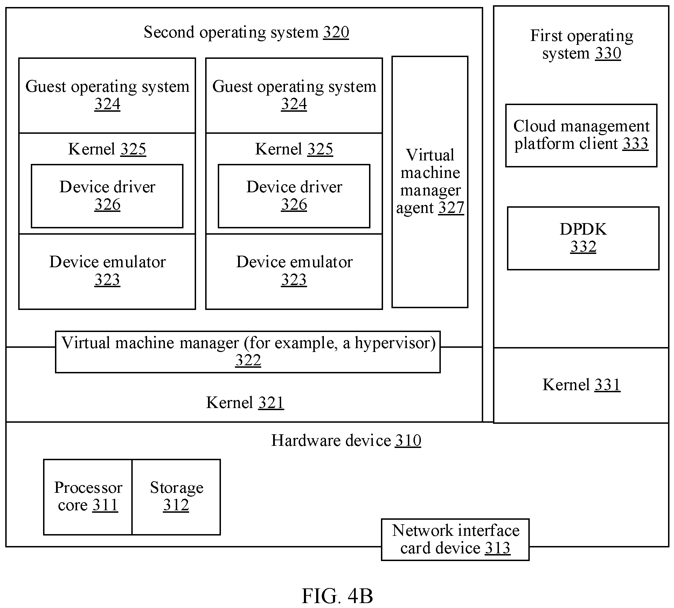

In a second manner, a DPDK is provided in the first operating system, and the network interface card device in the server is a common network interface card device. In a specific embodiment, as shown in FIG. 4B, a hardware device 310 of a server includes a processor core 311, a storage 312, a network interface card device 313 (a common network interface card device), and the like. A second operating system 320 and a first operating system 330 simultaneously run on the hardware device 310 of the server. The second operating system 320 may include a kernel (for example, a kernel) 321 of the second operating system. A virtual machine manager 322, for example, a hypervisor, may be installed in a kernel 321 of the second operating system, and one or more device emulators 323 may be provided above the kernel 321 of the second operating system. A guest operating system 324 may be installed above the device emulator 323. The guest operating system 324 may include a kernel 325 of the guest operating system, and a device driver (device driver) 326 may be installed in the kernel 325 of the guest operating system. A virtual machine manager agent (VM manager agent) 327 may be further installed in the second operating system 320, to help invoke a cloud management platform client 333 in the first operating system 330. The first operating system 330 may include a kernel (for example, a kernel) 331 of the first operating system, and a DPDK 332 and the cloud management platform client 333 may be installed in the first operating system 330.

The processor core 311 may include the first processor core and the second processor core that are mentioned above. The first processor core is configured to run the first operating system 330, and the second processor core is configured to run the second operating system 320. The virtual machine manager 322 may be the first virtual machine manager mentioned above. The foregoing virtual machine packet forwarding module, operating system startup module, operating system shutdown module, specification adjustment module, and upgrade module may be further installed in the first operating system. The virtual machine packet forwarding module may be installed in the first operating system, or may be installed in the second operating system. This is not specifically limited herein.

In the foregoing solution, the virtual machine management agent 327 is provided, and may be configured to create a virtual machine. During actual application, the virtual machine management agent 327 may alternatively not be provided, but the virtual machine manager 322 is responsible for creating the virtual machine.

In the foregoing solution, network storage data plane forwarding software such as the DPDK is installed in the first operating system, so that the first operating system is fully used. In this case, the common network interface card device instead of an intelligent network interface card may be used as the network interface card device. In addition, in this manner, only software that causes virtual machine escape is installed in the second operating system 320, and software that does not cause the virtual machine escape is not installed. Only software that does not cause the virtual machine escape is installed in the first operating system 330. Because the software that causes the virtual machine escape is installed in the second operating system, a vulnerability easily occurs, causing the second operating system to be attacked by a hacker. The vulnerability needs to be fixed in time. However, only software that causes the virtual machine escape is installed in the second operating system 320, and a capacity is small. In addition, the second operating system 320 does not involve management of a network storage data forwarding plane and a virtual machine, so that hot upgrade can be quickly performed on the second operating system 320, where an upgrade speed is high.

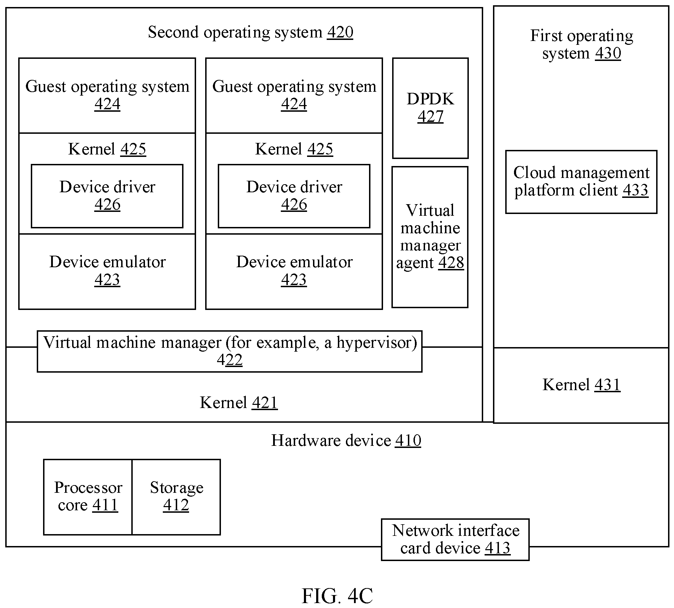

In a third manner, a DPDK is provided in the second operating system, and the network interface card device in the server is a common network interface card device. In a specific embodiment, as shown in FIG. 4C, a hardware device 410 of a server includes a processor core 411, a storage 412, a network interface card device 413 (a common network interface card device), and the like. A second operating system 420 and a first operating system 430 simultaneously run on the hardware device 410 of the server. The second operating system 420 may include a kernel (for example, a kernel) 421 of the second operating system 420. A virtual machine manager 422, for example, a hypervisor, may be installed in the kernel 421 of the second operating system 420, and one or more device emulators 423 may be provided above the kernel 421 of the second operating system 420. A guest operating system 424 may be installed above the device emulator 423. The guest operating system 424 may include a kernel 425 of the guest operating system, and a device driver (device driver) 426 may be installed in the kernel 425 of the guest operating system. A DPDK 427 and a virtual machine manager agent (VM manager agent) 428 may be further installed in the second operating system 420, to help invoke a cloud management platform client 433 in the first operating system 430. The first operating system 430 may include a kernel (for example, a kernel) 431 of the first operating system, and the cloud management platform client 433 may be installed in the first operating system 430.

The processor core 411 may include the first processor core and the second processor core that are mentioned above. The first processor core is configured to run the first operating system 430, and the second processor core is configured to run the second operating system 420. The virtual machine manager 422 may be the first virtual manager mentioned above. The foregoing virtual machine packet forwarding module, operating system startup module, operating system shutdown module, specification adjustment module, and upgrade module may be further installed in the first operating system. The virtual machine packet forwarding module may be installed in the first operating system, or may be installed in the second operating system. This is not specifically limited herein.

In the foregoing solution, in addition to a case in which only the software that causes the virtual machine escape is installed in the second operating system, a case in which some software that does not cause the virtual machine escape may also be installed in the second operating system is further provided for a user to select, to adapt to requirements in different scenarios. For example, in a case in which a capacity of the first operating system is insufficient because there is a large quantity of software that does not cause the virtual machine escape in the first operating system, some software that does not cause the virtual machine escape may be installed in the second operating system.

It may be understood that, when the server runs in an initial state, only the software that causes the virtual machine escape may be installed in the second operating system. As a running process continues, more software that does not cause the virtual machine escape is installed in the first operating system. In this case, some software that does not cause the virtual machine escape may be subsequently installed, reinstalled, or migrated to the second operating system, to reduce load of the first operating system, so that both the second operating system and the first operating system run in a good state. Similarly, when the server runs in an initial state, both the software that causes the virtual machine escape and the software that does not cause the virtual machine escape may be installed in the second operating system. As a running process continues, a quantity of software in the first operating system is increasingly small due to uninstallation. In this case, the software that does not cause the virtual machine escape in the second operating system may be installed, reinstalled, or migrated to the first operating system, so that the second operating system can be hot upgraded. In addition, the software that does not cause the virtual machine escape may be migrated between the second operating system and the first operating system for a plurality of times. This is not specifically limited herein.

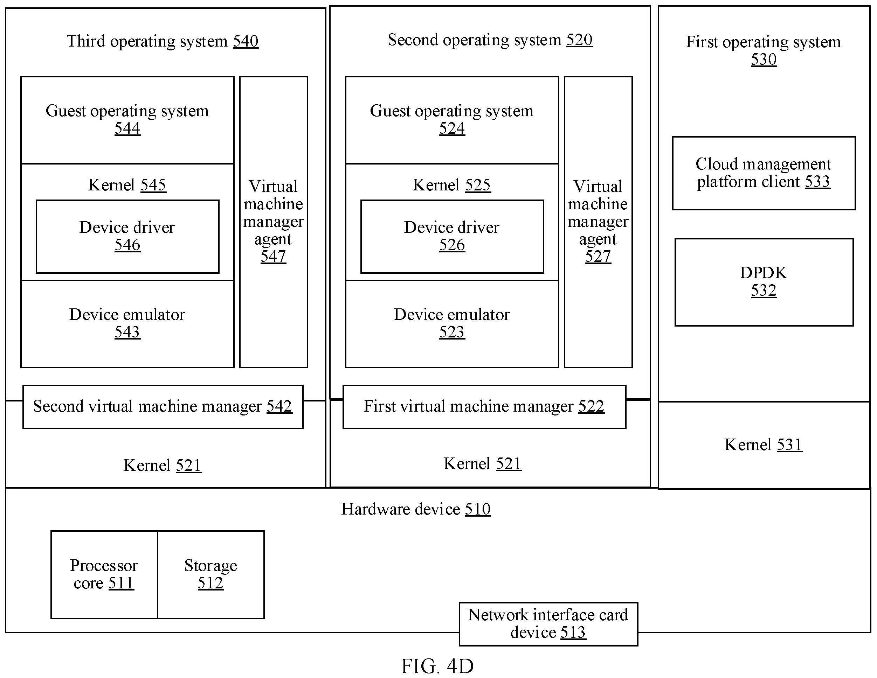

In a fourth manner, as shown in FIG. 4D, a hardware device 510 of a server includes a processor core 511, a storage 512, a network interface card device 513, and the like. A plurality of operating systems, that is, a third operating system 540, a second operating system 520, and a first operating system 530, simultaneously run on the hardware device 510 of the server. The second operating system is used as an example. The second operating system includes a kernel (for example, a kernel) 521 of the second operating system. A first virtual machine manager 522, for example, a hypervisor, may be installed in the kernel 521 of the second operating system, and one or more device emulators 523 may be provided above the kernel 521 of the second operating system. A guest operating system 524 may be installed above the device emulator 523. The guest operating system 524 may include a kernel 525 of the guest operating system, and a device driver (device driver) 526 may be installed in the kernel 525 of the guest operating system. A virtual machine manager agent (VM manager agent) 527 may be further installed in the second operating system, to help invoke a cloud management platform client 533 in the first operating system 530. A second virtual machine manager 542, a device emulator 543, a guest operating system 544, a kernel 545, and a virtual machine manager agent 547 in the third operating system 540 are all similar to the first virtual machine manager 522, the device emulator 523, the guest operating system 524, the kernel 525, and the virtual machine manager agent 527 in the second operating system, and are not further described herein. The first operating system 530 may include a kernel (for example, a kernel) 531 of the first operating system, and a DPDK 532 and the cloud management platform client 533 may be installed in the first operating system 530. The first operating system 530 is separately responsible for managing the second operating system and the third operating system.

The processor core 511 may include the first processor core, the second processor core, and the third processor core that are mentioned above. The first processor core is configured to run the first operating system 530, the second processor core is configured to run the second operating system 520, and the third processor core is configured to run the third operating system 540. The first virtual machine manager 522 may be the first virtual manager mentioned above. The second virtual machine manager 542 may be the second virtual manager mentioned above. The foregoing virtual machine packet forwarding module, operating system startup module, operating system shutdown module, specification adjustment module, and upgrade module may be further installed in the first operating system. The virtual machine packet forwarding module may be installed in the first operating system, or may be installed in the second operating system. This is not specifically limited herein.

In the foregoing solution, software that causes virtual machine escape may be separately installed in different second operating systems, so that an isolation effect is better. For example, the software that causes the virtual machine escape may be classified based on an upgrade frequency. Software that most easily causes the virtual machine escape and that has a highest upgrade frequency is provided in the second operating system, software that more easily causes the virtual machine escape and that has a higher upgrade frequency is provided in the third operating system, and a software module that does not cause the virtual machine escape and that has a lowest upgrade frequency is installed in the first operating system. In this way, the software in the second operating system can be ensured to be upgraded in time, and the upgrade can be prevented from occupying an excessive resource.

It should be understood that the software in each operating system may be specifically provided according to a setting policy. The setting policy may comprehensively consider one or more of the following: security of the software, an upgrade frequency, a quantity of resources occupied by the operating system, a quantity of available resources of the operating system, whether software that does not cause the virtual machine escape is installed in the operating system, and the like. The setting policy may be specified by the user, or may be a preferred policy determined based on an algorithm. This is not specifically limited herein.

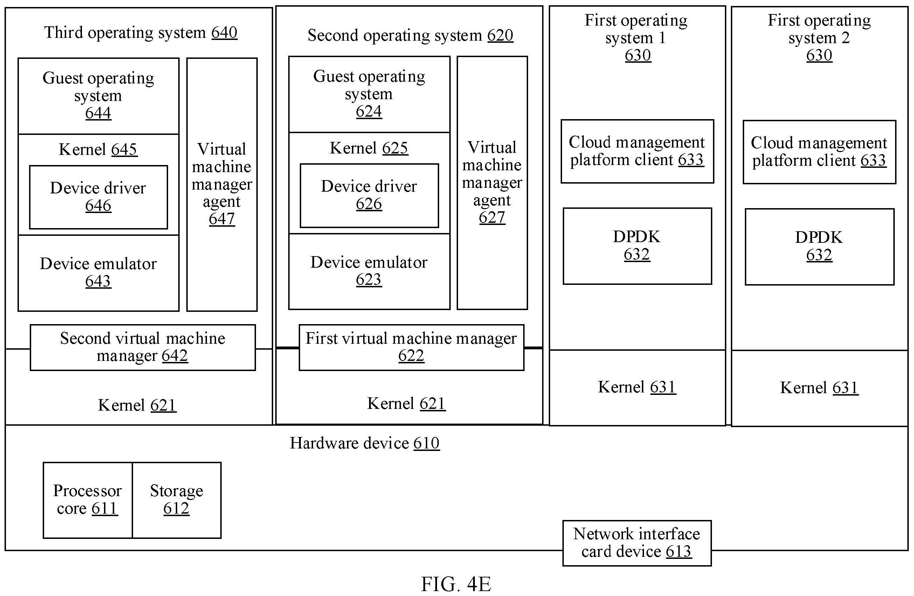

In a fifth manner, as shown in FIG. 4E, a first operating system 1 is responsible for managing a second operating system, and a first operating system 2 is responsible for managing a third operating system. Either of the first operating system 1 and the first operating system 2 may be selected to manage all hardware devices of a server.

A hardware device 610 of the server includes a processor core 611, a storage 612, a network interface card device 613, and the like. A plurality of second operating systems 620 and a plurality of first operating systems 630 simultaneously run on the hardware device 610 of the server. The first operating system 630 includes the first operating system 1 and the first operating system 2. The second operating system is used as an example. The second operating system includes a kernel (for example, a kernel) 621 of the second operating system. A first virtual machine manager 622, for example, a hypervisor, may be installed in the kernel 621 of the second operating system, and one or more device emulators 623 may be provided above the kernel 621 of the second operating system. A guest operating system 624 may be installed above the device emulator 623. The guest operating system 624 may include a kernel 625 of the guest operating system, and a device driver (device driver) 626 may be installed in the kernel 625 of the guest operating system. A virtual machine manager agent (VM manager agent) 627 may be further installed in the second operating system, to help invoke a cloud management platform client 633 in the first operating system 1. The first operating system 1 may include a kernel (for example, a kernel) 631 of the first operating system, and a DPDK 632 and the cloud management platform client 633 may be installed in the first operating system 1. A relationship between the third operating system and the first operating system 2 is also similar. A second virtual machine manager 642, a device emulator 643, a guest operating system 644, a kernel 645, and a virtual machine manager agent 647 in the third operating system 640 are all similar to the first virtual machine manager 622, the device emulator 623, the guest operating system 624, the kernel 625, and the virtual machine manager agent 627 in the second operating system, and are not further described herein.

The processor core 611 may include the first processor core, the second processor core, and the third processor core that are mentioned above. The first processor core is configured to run the first operating system 630, the second processor core is configured to run the second operating system 620, and the third processor core is configured to run the third operating system 640. The first virtual machine manager 622 may be the first virtual manager mentioned above. The second virtual machine manager 642 may be the second virtual manager mentioned above. The foregoing virtual machine packet forwarding module, operating system startup module, operating system shutdown module, specification adjustment module, and upgrade module may be further installed in the first operating system. The virtual machine packet forwarding module may be installed in the first operating system, or may be installed in the second operating system. This is not specifically limited herein.

In the embodiment shown in FIG. 4E, software that causes virtual machine escape may be classified based on an upgrade frequency, and software that does cause the virtual machine escape may be classified based on an upgrade frequency. Then, software that causes the virtual machine escape and that has a highest upgrade frequency is provided in the second operating system, and software that causes the virtual machine escape and that has a lower upgrade frequency is provided in the third operating system. Software that does not cause the virtual machine escape and that has a higher upgrade frequency is provided in the first operating system 1, and software that does not cause the virtual machine escape and that has a lower upgrade frequency is provided in the first operating system 2. In this way, quantities of software in the second operating system and the third operating system are smaller, upgrade speeds are higher, and quantities of resources consumed during upgrade are smaller. The upgrade frequency can be reduced for the software in the second operating system and that in the third operating system, thereby reducing resource consumption. Alternatively, software that causes virtual machine escape may be classified based on a risk degree, and software that does not cause the virtual machine escape may be classified based on a risk degree. Then, software with a highest risk degree is provided in the second operating system, software with a second highest risk degree is provided in the third operating system, software with a second lowest risk degree is provided in the first operating system 1, and software with a lowest risk degree is provided in the first operating system 2. In this way, software with high risks can be isolated layer by layer, thereby effectively improving security performance. Certainly, alternatively, software that causes virtual machine escape may be classified based on security, and software that does not cause the virtual machine escape may be classified based on an upgrade frequency. Then, software that is most dangerous is provided in the second operating system, software that is second most dangerous is provided in the third operating system, software that does not cause the virtual machine escape and that has a high upgrade frequency is provided in the first operating system 1, and a software module that does not cause the virtual machine escape and that has a low upgrade frequency is provided in the first operating system 2.

Herein, a relationship between the second operating system and the first operating system in FIG. 4D and FIG. 4E is complex. Therefore, a startup relationship and a communication relationship between the second operating system and the first operating system are also complex. The following provides a further description with reference to a specific example.

### (1) Startup of the second operating system and the first operating system

The example shown in FIG. 4D is used as an example. The first operating system may manage both the second operating system and the third operating system. In this case, the first operating system may first boot, based on the foregoing method, the second operating system to start, and then the first operating system boots, based on the foregoing method, the third operating system to start. Alternatively, the first operating system may first boot, based on the foregoing method, the second operating system to start, and then the second operating system may first boot, based on the foregoing method, the third operating system to start.

The example shown in FIG. 4E is used as an example. The first operating system 1 may first boot, based on the foregoing method, the first operating system 2 to start, then the first operating system 1 boots, based on the foregoing method, the second operating system to start, and the first operating system 2 may first boot, based on the foregoing method, the third operating system to start.

### (2) Communication between the second operating system and the first operating system

The example shown in FIG. 4D is used as an example. The first operating system may separately establish a communication channel to the second operating system and the third operating system in the foregoing manner. Optionally, a communication channel may also be established between the second operating system and the third operating system by using the foregoing method. Alternatively, the first operating system may establish a communication channel to the second operating system in the foregoing manner, and a communication channel may also be established between the second operating system and the third operating system by using the foregoing method.

The example shown in FIG. 4E is used as an example. The first operating system 1 may establish a communication channel to the second operating system in the foregoing manner, and the first operating system 2 may establish a communication channel to the third operating system in the foregoing manner. Optionally, a communication channel may be established between the first operating system 1 and the first operating system 2 in the foregoing manner, and a communication channel may also be established between the second operating system and the third operating system in the foregoing manner.

In all of the foregoing examples, an example in which non-hot upgrade software is installed in the first operating system and hot upgrade software is installed in the second operating system is used for description. During actual application, software that needs to be isolated may be randomly separately installed in the first operating system and the second operating system. For example, the first operating system may be configured to be installed with large software, and the second operating system may be configured to be installed with small software. This is not specifically limited herein.

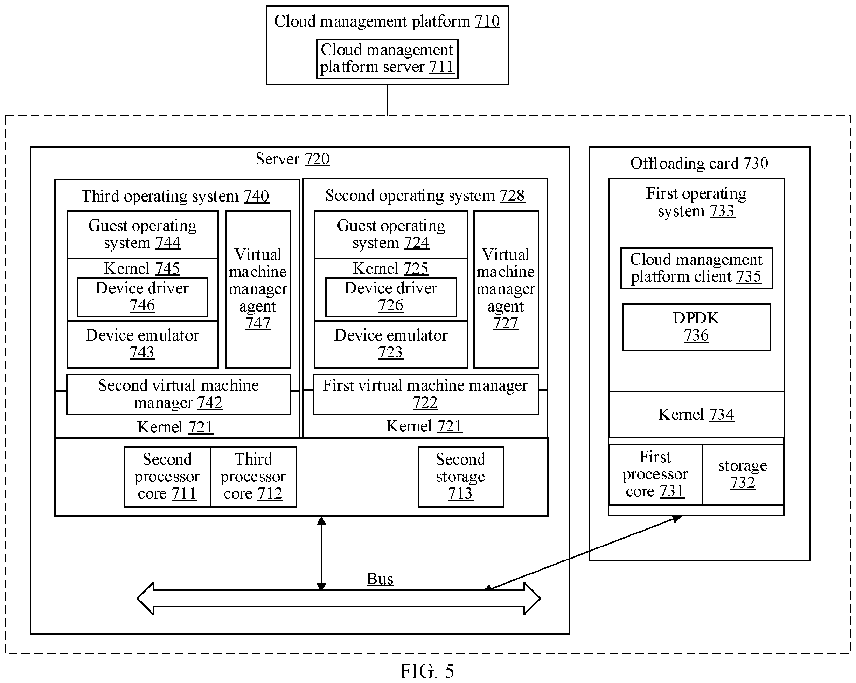

FIG. 5 is a diagram of a structure of another cloud system according to this application. As shown in FIG. 5, the cloud system provided in this application includes a cloud management platform 710 and a plurality of servers 720 in network connection with the cloud management platform (for ease of presentation, FIG. 5 shows only one server 720).

The cloud management platform 710 is configured to receive first configuration information that is of a first virtual machine to be created and that is entered by a tenant, and select, from the plurality of servers, a target server that can provide a virtual hardware resource indicated by the first configuration information. The cloud management platform 710 may include a cloud management platform server 711. The cloud management platform server 711 may cooperate with a cloud management platform client 735 to complete management of the server by the cloud management platform.

The server includes one or more processors. An architecture of the processor may include a reduced instruction set computer (reduced instruction set computer, RISC), where each instruction is used to complete only one simple operation. A processor of a RISC structure may execute instructions at a faster speed for a commonly used simple operation, and the processor of the RISC structure usually completes a rarely used operation by combining the instructions. For a complex instruction set computer (complex instruction set computer, CISC), each instruction may perform several simple operations, for example, operations such as reading from a storage, storing, and computing are integrated into a single complex instruction. The processor may be a single-core processor or a multi-core processor. The processor may be an X86 processor, an embedded processor, or the like. The one or more processors may include one or more processor cores (cores). The server may further include one or more memories, one or more offloading cards, and the like. In a specific embodiment, the server includes a second storage 713, a second processor core 711, a third processor core 712, and an offloading card 730. The offloading card 730 includes a first storage 732 and at least one first processor core 731. The first storage 732 stores code of an operating system configured to communicate with the cloud management platform, and the second storage 713 stores code of an operating system configured to manage a virtual machine.

In the foregoing example, two operating systems, namely, the second operating system and the third operating system, are provided in the server 720. However, during actual application, only one second operating system or more operating systems may alternatively be provided. This is not specifically limited herein. In addition, a first operating system 733 and the cloud management platform client 735, a DPDK 736, and a kernel 734 in the first operating system are all similar to the first operating system and the cloud management platform client, the DPDK, and the kernel in the first operating system in the foregoing example. A second operating system 728, a kernel 721 of the second operating system 728, a first virtual machine manager 722, a device emulator 723, a guest operating system 724, a kernel 725 of the guest operating system, and a device driver 726 are all similar to the second operating system, the kernel of the second operating system, the first virtual machine manager, the device emulator, the guest operating system, the kernel of the guest operating system, and the device driver in the foregoing embodiment. A third operating system 740, a kernel 721 of the third operating system 740, a second virtual machine manager 742, a device emulator 743, a guest operating system 744, a kernel 745 of the guest operating system, and a device driver 746 are all similar to the third operating system, the kernel of the third operating system, the second virtual machine manager, the device emulator, the guest operating system, the kernel of the guest operating system, and the device driver in the foregoing embodiment. For details, refer to the foregoing description.

This application further provides a cloud computing technology-based server, including at least one first processor core, at least one second processor core, and a storage. The storage stores code of a first operating system and code of a second operating system. For the server based on the cloud computing technology in this embodiment, refer to the server in the cloud system shown in FIG. 1. Details are not described herein.

This application further provides a cloud computing technology-based server, including an offloading card inserted into the server and connected to a bus of the server. The offloading card includes a first storage and at least one first processor core, the server further includes a second storage and at least one second processor core, the first storage stores code of an operating system configured to communicate with a cloud management platform, and the second storage stores code of an operating system configured to manage a virtual machine. For the cloud computing technology-based server in this embodiment, refer to the server in the cloud system shown in FIG. 5. Details are not described herein.

In the foregoing embodiments, the descriptions of the embodiments have respective focuses. For a part that is not described in detail in a specific embodiment, refer to related descriptions in other embodiments.

All or a part of the foregoing embodiments may be implemented by using software, hardware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A cloud computing technology-based server, comprising at least one first processor core, at least one second processor core, and a storage, wherein the storage stores code of an operating system configured to communicate with a cloud management platform and code of an operating system configured to manage a virtual machine;
the at least one first processor core is configured to execute the code of the operating system configured to communicate with the cloud management platform, to start and run a first operating system, wherein
a cloud management platform client runs in the first operating system, and the cloud management platform client is configured to obtain, from the cloud management platform, first configuration information of a first virtual machine to be created; and
the at least one second processor core is configured to execute the code of the operating system configured to manage the virtual machine, to start and run a second operating system, wherein
a first virtual machine manager runs in the second operating system, and the first virtual machine manager is configured to: receive the first configuration information sent by the cloud management platform client, create and run the first virtual machine in the second operating system, and set, for the first virtual machine, a virtual hardware resource that matches the first configuration information.

2. The server according to claim 1, wherein
the cloud management platform client is further configured to: obtain a management command for a life cycle of the first virtual machine from the cloud management platform and send the management command to the first virtual machine manager; and
the first virtual machine manager is further configured to perform one or any combination of the following operations on the first virtual machine according to the management command: powering on, powering off, changing a specification, migrating, and releasing.

3. The server according to claim 1 or 2, wherein
a virtual machine packet forwarding module further runs in the first operating system, and the virtual machine packet forwarding module forwards a first service packet related to the first virtual machine to the first virtual machine or forwards a second service packet received from the first virtual machine to an external network of the server.

4. The server according to claim 1 or 2, wherein
a virtual machine packet forwarding module further runs in the second operating system, and the virtual machine packet forwarding module forwards a first service packet related to the first virtual machine to the first virtual machine or forwards a second service packet received from the first virtual machine to an external network of the server.

5. The server according to any one of claims 1 to 4, wherein
an operating system startup module further runs in the first operating system, and the operating system startup module is configured to trigger the at least one second processor core to execute the code of the operating system configured to manage the virtual machine, to start and run the second operating system.

6. The server according to any one of claims 1 to 5, wherein
an operating system shutdown module further runs in the first operating system, and the operating system shutdown module is configured to trigger the at least one second processor core to stop executing the code of the operating system configured to manage the virtual machine, to shut down the second operating system.

7. The server according to any one of claims 1 to 6, wherein
a specification adjustment module further runs in the first operating system, and the specification adjustment module is configured to adjust a quantity of the at least one second processor core allocated to the second operating system, a size of a memory allocated to the second operating system, and/or types and a quantity of PCI devices or PCIe devices allocated to the second operating system in the server.

8. The server according to any one of claims 1 to 7, wherein the cloud management platform client is further configured to obtain an operating system upgrade file from the cloud management platform; and
an upgrade module further runs in the first operating system, and the upgrade module is configured to trigger the at least one second processor core to perform operating system upgrade on the second operating system based on the operating system upgrade file.

9. The server according to any one of claims 1 to 8, wherein a shared memory area of the first operating system and the second operating system is provided in the storage; and
the cloud management platform client is configured to: send the first configuration information to the shared memory area and generate an interrupt signal to notify the first virtual machine manager in the second operating system to obtain the first configuration information from the shared memory area.

10. The server according to any one of claims 1 to 9, wherein the server further comprises at least one third processor core;
the cloud management platform client obtains, from the cloud management platform, second configuration information of a second virtual machine to be created; and
the at least one third processor core is configured to execute the code of the operating system configured to manage the virtual machine, to start and run a third operating system, wherein
a second virtual machine manager runs in the third operating system, and the second virtual machine manager is configured to: receive the second configuration information sent by the cloud management platform client, create and run the second virtual machine in the second operating system, and set, for the second virtual machine, a virtual hardware resource that matches the second configuration information.

11. A server, comprising an offloading card inserted into the server, wherein the offloading card comprises a first storage and at least one first processor core, the server further comprises a second storage and at least one second processor core, the first storage stores code of an operating system configured to communicate with a cloud management platform, and the second storage stores code of an operating system configured to manage a virtual machine;
the at least one first processor core is configured to execute the code of the operating system configured to communicate with the cloud management platform, to start and run a first operating system, wherein
a cloud management platform client runs in the first operating system, and the cloud management platform client is configured to obtain, from the cloud management platform, first configuration information of a first virtual machine to be created; and
the at least one second processor core is configured to execute the code of the operating system configured to manage the virtual machine, to start and run a second operating system, wherein
a first virtual machine manager runs in the second operating system, and the first virtual machine manager is configured to: receive the first configuration information sent by the cloud management platform client, create and run the first virtual machine in the second operating system, and set, for the first virtual machine, a virtual hardware resource that matches the first configuration information.

12. The server according to claim 11, wherein
the cloud management platform client is further configured to: obtain a management command for a life cycle of the first virtual machine from the cloud management platform and send the management command to the first virtual machine manager; and
the first virtual machine manager is further configured to perform one or any combination of the following operations on the first virtual machine according to the management command: powering on, powering off, changing a specification, migrating, and releasing.

13. The server according to claim 11 or 12, wherein
a virtual machine packet forwarding module further runs in the first operating system, and the virtual machine packet forwarding module is configured to forward a first service packet related to the first virtual machine to the first virtual machine or forward a second service packet received from the first virtual machine to an external network of the server.

14. The server according to claim 11 or 12, wherein
a virtual machine packet forwarding module further runs in the second operating system, and the virtual machine packet forwarding module is configured to forward a first service packet related to the first virtual machine to the first virtual machine or forward a second service packet received from the first virtual machine to an external network of the server.

15. The server according to any one of claims 11 to 14, wherein
an operating system startup module further runs in the first operating system, and the operating system startup module is configured to trigger the at least one second processor core to execute the code of the operating system configured to manage the virtual machine, to start and run the second operating system.

16. The server according to any one of claims 11 to 15, wherein
an operating system shutdown module further runs in the first operating system, and the operating system shutdown module is configured to trigger the at least one second processor core to stop executing the code of the operating system configured to manage the virtual machine, to shut down the second operating system.

17. The server according to any one of claims 11 to 16, wherein
a specification adjustment module further runs in the first operating system, and the specification adjustment module is configured to adjust a quantity of the at least one second processor core allocated to the second operating system, a size of a memory allocated to the second operating system, and/or types and a quantity of PCI devices or PCIe devices allocated to the second operating system in the server.

18. The server according to any one of claims 11 to 17, wherein the cloud management platform client is further configured to obtain an operating system upgrade file from the cloud management platform; and
an upgrade module further runs in the first operating system, and the upgrade module is configured to trigger the at least one second processor core to perform operating system upgrade on the second operating system based on the operating system upgrade file.

19. The server according to any one of claims 11 to 18, wherein a shared memory area of the first operating system and the second operating system is provided in the second storage; and
the cloud management platform client is configured to: send the first configuration information to the shared memory area and generate an interrupt signal to notify the first virtual machine manager in the second operating system to obtain the first configuration information from the shared memory area.

20. The server according to any one of claims 11 to 19, wherein the server further comprises at least one third processor core;
the cloud management platform client obtains, from the cloud management platform, second configuration information of a second virtual machine to be created; and
the at least one third processor core is configured to execute the code of the operating system configured to manage the virtual machine, to start and run a third operating system, wherein
a second virtual machine manager runs in the third operating system, and the second virtual machine manager is configured to: receive the second configuration information sent by the cloud management platform client, create and run the second virtual machine in the second operating system, and set, for the second virtual machine, a virtual hardware resource that matches the second configuration information.

21. A cloud system, comprising a cloud management platform and a plurality of servers in network connection with the cloud management platform, wherein
the cloud management platform is configured to receive first configuration information that is of a first virtual machine to be created and that is entered by a tenant, and select, from the plurality of servers, a target server that can provide a virtual hardware resource indicated by the first configuration information;
the target server comprises at least one first processor core, at least one second processor core, and a storage, wherein the storage stores code of an operating system configured to communicate with the cloud management platform and code of an operating system configured to manage a virtual machine;
the at least one first processor core is configured to execute the code of the operating system configured to communicate with the cloud management platform, to start and run a first operating system;
a cloud management platform client runs in the first operating system, and the cloud management platform client is configured to obtain, from the cloud management platform, first configuration information of a first virtual machine to be created; and
the at least one second processor core is configured to execute the code of the operating system configured to manage the virtual machine, to start and run a second operating system, wherein
a first virtual machine manager runs in the second operating system, and the first virtual machine manager is configured to: receive the first configuration information sent by the cloud management platform client, create and run the first virtual machine in the second operating system, and set, for the first virtual machine, a virtual hardware resource that matches the first configuration information.

22. The cloud system according to claim 21, wherein
the cloud management platform client is further configured to: obtain a management command for a life cycle of the first virtual machine from the cloud management platform and send the management command to the first virtual machine manager; and
the first virtual machine manager is further configured to perform one or any combination of the following operations on the first virtual machine according to the management command: powering on, powering off, changing a specification, migrating, and releasing.

23. The cloud system according to claim 21 or 22, wherein
a virtual machine packet forwarding module further runs in the first operating system, and the virtual machine packet forwarding module forwards a first service packet related to the first virtual machine to the first virtual machine or forwards a second service packet received from the first virtual machine to an external network of the server.

24. The cloud system according to claim 21 or 22, wherein
a virtual machine packet forwarding module further runs in the second operating system, and the virtual machine packet forwarding module forwards a first service packet related to the first virtual machine to the first virtual machine or forwards a second service packet received from the first virtual machine to an external network of the server.

25. The cloud system according to any one of claims 21 to 24, wherein
an operating system startup module further runs in the first operating system, and the operating system startup module is configured to trigger the at least one second processor core to execute the code of the operating system configured to manage the virtual machine, to start and run the second operating system.

26. The cloud system according to any one of claims 21 to 25, wherein
an operating system shutdown module further runs in the first operating system, and the operating system shutdown module is configured to trigger the at least one second processor core to stop executing the code of the operating system configured to manage the virtual machine, to shut down the second operating system.

27. The cloud system according to any one of claims 21 to 26, wherein
a specification adjustment module further runs in the first operating system, and the specification adjustment module is configured to adjust a quantity of the at least one second processor core allocated to the second operating system, a size of a memory allocated to the second operating system, and/or types and a quantity of PCI devices or PCIe devices allocated to the second operating system in the server.

28. The cloud system according to any one of claims 21 to 27, wherein the cloud management platform client is further configured to obtain an operating system upgrade file from the cloud management platform; and
an upgrade module further runs in the first operating system, and the upgrade module is configured to trigger the at least one second processor core to perform operating system upgrade on the second operating system based on the operating system upgrade file.

29. The cloud system according to any one of claims 21 to 28, wherein a shared memory area of the first operating system and the second operating system is provided in the storage; and
the cloud management platform client is configured to: send the first configuration information to the shared memory area and generate an interrupt signal to notify the first virtual machine manager in the second operating system to obtain the first configuration information from the shared memory area.

30. The cloud system according to any one of claims 21 to 29, wherein the server further comprises at least one third processor core;
the cloud management platform client obtains, from the cloud management platform, second configuration information of a second virtual machine to be created; and
the at least one third processor core is configured to execute the code of the operating system configured to manage the virtual machine, to start and run a third operating system, wherein
a second virtual machine manager runs in the third operating system, and the second virtual machine manager is configured to: receive the second configuration information sent by the cloud management platform client, create and run the second virtual machine in the second operating system, and set, for the second virtual machine, a virtual hardware resource that matches the second configuration information.

31. A cloud system, comprising a cloud management platform and a plurality of servers in network connection with the cloud management platform, wherein
the cloud management platform is configured to receive first configuration information that is of a first virtual machine to be created and that is entered by a tenant, and select, from the plurality of servers, a target server that can provide a virtual hardware resource indicated by the first configuration information;
the target server comprises an offloading card inserted into the target server, wherein the offloading card comprises a first storage and at least one first processor core, the target server further comprises a second storage and at least one second processor core, the first storage stores code of an operating system configured to communicate with the cloud management platform, and the second storage stores code of an operating system configured to manage a virtual machine;
the at least one first processor core is configured to execute the code of the operating system communicating with the cloud management platform, to start and run a first operating system, wherein
a cloud management platform client runs in the first operating system, and the cloud management platform client is configured to obtain, from the cloud management platform, first configuration information of a first virtual machine to be created; and
the at least one second processor core is configured to execute the code of the operating system configured to manage the virtual machine, to start and run a second operating system, wherein
a first virtual machine manager runs in the second operating system, and the first virtual machine manager is configured to: receive the first configuration information sent by the cloud management platform client, create and run the first virtual machine in the second operating system, and set, for the first virtual machine, a virtual hardware resource that matches the first configuration information.

32. The cloud system according to claim 31, wherein
the cloud management platform client is further configured to: obtain a management command for a life cycle of the first virtual machine from the cloud management platform and send the management command to the first virtual machine manager; and
the first virtual machine manager is further configured to perform one or any combination of the following operations on the first virtual machine according to the management command: powering on, powering off, changing a specification, migrating, and releasing.

33. The cloud system according to claim 31 or 32, wherein
a virtual machine packet forwarding module further runs in the first operating system, and the virtual machine packet forwarding module is configured to forward a first service packet related to the first virtual machine to the first virtual machine or forward a second service packet received from the first virtual machine to an external network of the server.

34. The cloud system according to claim 31 or 32, wherein
a virtual machine packet forwarding module further runs in the second operating system, and the virtual machine packet forwarding module is configured to forward a first service packet related to the first virtual machine to the first virtual machine or forward a second service packet received from the first virtual machine to an external network of the server.

35. The cloud system according to any one of claims 31 to 34, wherein
an operating system startup module further runs in the first operating system, and the operating system startup module is configured to trigger the at least one second processor core to execute the code of the operating system configured to manage the virtual machine, to start and run the second operating system.

36. The cloud system according to any one of claims 31 to 35, wherein
an operating system shutdown module further runs in the first operating system, and the operating system shutdown module is configured to trigger the at least one second processor core to stop executing the code of the operating system configured to manage the virtual machine, to shut down the second operating system.

37. The cloud system according to any one of claims 31 to 36, wherein
a specification adjustment module further runs in the first operating system, and the specification adjustment module is configured to adjust a quantity of the at least one second processor core allocated to the second operating system, a size of a memory allocated to the second operating system, and/or types and a quantity of PCI devices or PCIe devices allocated to the second operating system in the server.

38. The cloud system according to any one of claims 31 to 37, wherein the cloud management platform client is further configured to obtain an operating system upgrade file from the cloud management platform; and
an upgrade module further runs in the first operating system, and the upgrade module is configured to trigger the at least one second processor core to perform operating system upgrade on the second operating system based on the operating system upgrade file.

39. The cloud system according to any one of claims 31 to 38, wherein a shared memory area of the first operating system and the second operating system is provided in the second storage; and
the cloud management platform client is configured to: send the first configuration information to the shared memory area and generate an interrupt signal to notify the first virtual machine manager in the second operating system to obtain the first configuration information from the shared memory area.

40. The cloud system according to any one of claims 31 to 39, wherein the server further comprises at least one third processor core;
the cloud management platform client obtains, from the cloud management platform, second configuration information of a second virtual machine to be created; and
the at least one third processor core is configured to execute the code of the operating system configured to manage the virtual machine, to start and run a third operating system, wherein
a second virtual machine manager runs in the third operating system, and the second virtual machine manager is configured to: receive the second configuration information sent by the cloud management platform client, create and run the second virtual machine in the second operating system, and set, for the second virtual machine, a virtual hardware resource that matches the second configuration information.
